# EUROPEAN PATENT APPLICATION

(11) **EP 2 214 382 A1**
(43) Date of publication of application: **04.08.2010**
(21) Application number: 09305083.9
(22) Date of filing: 30.01.2009
(51) Int. Cl.: H04L 29/08

(54) **Method of reception of device logging information and method of transmission of device logging information**

(71) Applicant: Thomson Licensing SA, 92130 Issy-les-Moulineaux (FR)
(72) Inventor: Bezard, Cyrille, 92648, Boulogne Cedex (FR); Colmagro, Jean-Claude, 92648, Boulogne Cedex (FR); Straub, Gilles, 92648, Boulogne Cedex (FR)
(74) Representative: Huchet, Anne

(57) **Abstract**

The present invention relates to the field of transmission and reception of device logging information. More precisely, the present invention relates to the remote configuration and reception of device logging information.

To this effect, the invention comprises a method of reception of device logging information, comprising a step of transmission (701) of a request for transmission of a list of modules for which device logging information can be generated, a step of reception (702) of the list, a step of transmission (703) of a request to enable or disable generation of device logging information for a selected set of modules from the list, a step of transmission (704) of a destination address for sending device logging information, and a step of reception (705) of the device logging information on the destination address from modules for which the generation of device logging information is enabled.

## Description

### 1. Field of invention.

The present invention relates to the field of transmission and reception of device logging information. More precisely, the present invention relates to the remote configuration and reception of device logging information.

### 2. Technical background.

According to the prior art, a device, such as a modem for connection to an DSL (Digital Subscriber Line) type network, can store in a local buffer device logging information that gives information on the device's functioning for the purpose of troubleshooting or for the purpose of collecting usage statistics. The local buffer is of a limited size in order to preserve scarce local memory resources. When the buffer is full, no more information is added to the buffer or the buffer is overwritten for storing new device logging information. The buffer contents can be read from a locally connected device.

According to prior art, a device such as the previously mentioned device is not equipped with a device log buffer, but directly sends its device logging information on an output for local connection. Here, on-site intervention is needed to retrieve device logging information.

According to prior art, the generation of device logging information is often restricted to a limited number of functions that generate logging information, in order to avoid slowing down the execution of these functions.

Though current solutions for retrieving device logging information may suffice in laboratory or development environments, they have important drawbacks in complex, real-life situations, where many types of equipment are interconnected and create complex interactions. Often, the only solution of finding the cause of a problem that is due to an interaction of complex equipment of different manufacturers and that can not be reproduced in product development testing, is to send an engineer on site. This is particularly true for early deployments, when new devices are interconnected and used for beta testing.

Thus, solutions of prior art are not optimized for retrieving device logging information for purposes of troubleshooting, or usage statistics in real-life, technologically complex environments.

The present invention aims at alleviating the inconveniences of prior art.

More specifically, the invention enables optimizing the transmission and the reception of device logging information. Notably, the invention enables the generation of device logging information 'on demand', that is, generation of device logging information from, for example, a specific soft- or hardware module or a specific parameter, when needed. The features provided by the invention allow flexible generation and retrieval of device logging information.

The invention enables configuration of a remote configurable device from a device located anywhere in a data communication network in order to retrieve device logging information.

### 3. Summary of the invention.

The term 'module' as used throughout this document corresponds to hardware and/or software modules for which device logging information can be obtained. A module can be a subsystem, such as a smart card driver, a video driver, audio driver, hard disk driver. A module can also correspond to a feature, that is provided by one or more hard- or software functions such as conditional access, memory, network or interactive engine. A module can also correspond to a subsystem of a software- or hardware architecture, such as drivers, middleware and third party code.

The term 'device logging information' as used throughout this document means data generated by a device that reflects the state of that device or a device parameter and can for example be used for purposes of troubleshooting, or statistics usage gathering. Examples of device logging information for troubleshooting purposes are: the entering of and the returning from a specific hard- or software implemented function (for example "Function f(x) start" and "Function f(x) end", process or procedure, or the current value of a specific module parameter or set of parameters, or a message when a parameter goes beyond a threshold. Examples of device logging information for gathering usage statistics are: power on time and user zapping behavior.

The invention proposes a method of reception of device logging information where device logging information is received from a first device connected to a second device through a data communication network. The method comprises the following steps: a step of transmission by the second device of a request to transmit a list of modules for which device logging information can be generated, a step of reception by the second device of the list, a step of transmission by the second device of a request to enable or disable generation of device logging information for a selected set of modules from the list, a step of transmission by the second device of an destination address for sending of device logging information and a step of reception of the device logging information on the destination address from modules for which the generation of device logging is enabled.

According to a variant of the method of reception, the destination address is an address of a third device, different from an address of the first and the second device.

According to a variant of the method of reception, the list of modules and the request to enable or disable generation of device logging information comprises a verbosity level specified for all modules.

According to a variant of the method of reception, the list of modules and the request to enable or disable generation of device logging information comprises a verbosity level specified per module.

According to a variant of the method of reception, the network is a network that comprises at least one router device.

According to a variant of the method of reception, the steps of transmission and reception between the first and the second device are based on a web service protocol.

The invention also proposes a method of transmission of device logging information where device logging information is transmitted from a first device connected to a second device through a data communication network. The method comprises the following steps: a step of reception by the first device of a request to transmit a list of modules for which device logging information can be generated, a step of transmission by the first device of the list, a step of reception by the first device of a request to enable or disable generation of device logging information for a selected set of modules from the list, a step of reception by the first device of an destination address for sending of device logging information and a step of transmission of the device logging information on the destination address from modules for which the generation of device logging is enabled.

According to a variant of the method of transmission, the destination address is an address of a third device, different from an address of the first and the second device.

According to a variant of the method of transmission, the list of modules and the request to enable or disable generation of device logging information comprises a verbosity level specified for all modules.

According to a variant of the method of transmission, the list of modules and the request to enable or disable generation of device logging information comprises a verbosity level specified per module.

According to a variant of the method of transmission, the network is a network that comprises at least one router device.

According to a variant of the method of transmission, the steps of transmission and reception between the first and the second device are based on a web service protocol.

The invention also concerns a device for reception of device logging information, whereby device logging information is received from a first device connected to a second device through a data communication network. The device for reception comprises means for transmission of a request for transmission of a list of modules from which device logging information can be generated, means for reception of the list, means for transmission of a request to enable or disable generation of device logging information for a selected set of modules from the list, means for transmission of a destination address for sending device logging information, means for reception of the device logging information on the destination address from modules for which the generation of device logging information is enabled.

The invention also concerns a device for transmission of device logging information, whereby device logging information is transmitted from the device for transmission, where the device for transmission is connected to another second device through a data communication network. The device for transmission comprises means for reception of a request to transmit a list of modules for which device logging information can be generated, means for transmission of the list, means for reception of a request to enable or disable generation of device logging information for a selected set of modules from the list, means for reception of a destination address for sending device logging information, means for transmission of the device logging information on the destination address from modules for which the generation of device logging information is enabled.

### 4. List of figures.

More advantages of the invention will appear through the description of particular, non-restricting embodiments of the invention. The embodiments will be described with reference to the following figures:
- figures 1 to 3 illustrate three variant embodiments of the invention according to different data communication network architectures with devices implementing the invention;
- figure 4 shows a sequence diagram that illustrates message exchange between devices implementing the invention, belonging to the network infrastructure of figure 1, 2 or 3, according to a particular embodiment of the invention;
- figures 5 and 6 diagrammatically show, respectively, a configuration server and an remote configurable device belonging to the network of figure 1, 2 or 3, according to a particular embodiment of the method of reception, respectively the method of transmission of device logging information;
- figures 7 and 8 diagrammatically illustrate, respectively, a method reception and a method of transmission of device logging information according to particular embodiments of the invention, implemented for example by the device of figure 5, respectively figure 6.

### 5. Detailed description of the invention.

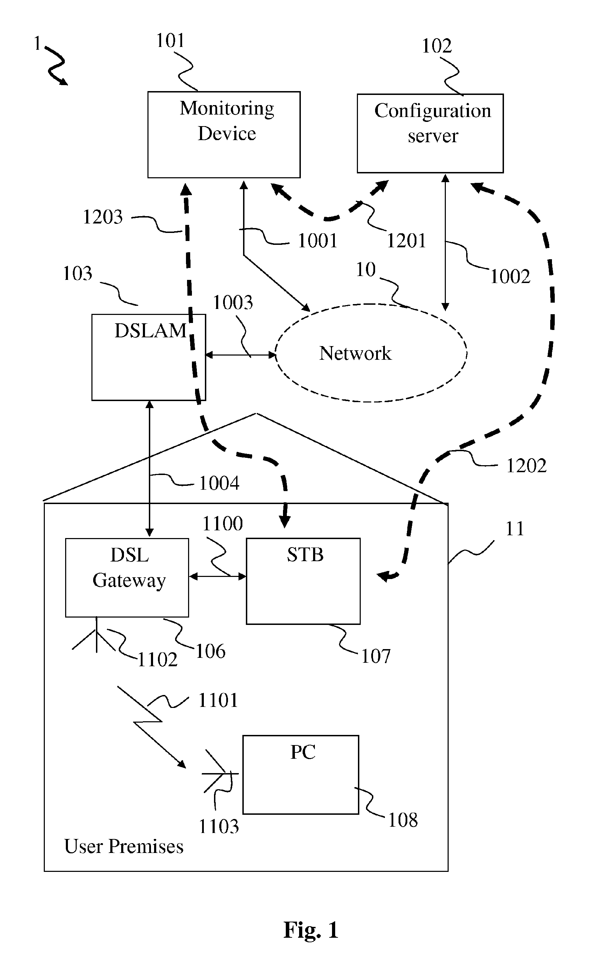

**Figure 1** shows a data communication network 1 implementing the invention according to a particular embodiment. This particular embodiment uses the TR-069 (Technical Report 069) CWMP specification as a basis (CWMP = CPE WAN management protocol, CPE = Consumer Premises Equipment).

The data communication network 1 comprises:
- a monitoring device 101, for example a Personal Computer or a dedicated equipment;
- a configuration server 102, for example a dedicated server ;
- a DSLAM (Digital Subscriber Line Access Multiplexer) 103 that allows connection of multiple user premises to the network;
- user premises 11 with multiple end user devices ; and
- a communications network 10, adapted to the transmission of digital data packets, for example an IP-based network.

The user premises 11 comprises:
- an DSL gateway 106, for example an DSL-to-IP modem with integrated router;
- a remote configurable device Set Top Box (STB) 107, for example an IPTV-STB (Set Top Box for reception of TV over IP);
   and
- a remote configurable device Personal Computer (PC) 108, for example a portable computer.

Monitoring device 101, configuration server 102 and DSLAM 103 are linked to communication network 10 via bidirectional link 1001, respectively 1002 and respectively 1003.

Monitoring device 101 is called so because it monitors the functioning of the remote configurable device 107.

DSL gateway 106 is linked to DSLAM 103 via bidirectional link 1004. DSL gateway 106 gives device 107, respectively 108 an IP based access to devices connected to network 10 via its wired Ethernet interface, respectively via its wireless WiFi interface (Wireless Fidelity, based on the 802.11 standards for wireless data communication). Amongst others, DSL gateway comprises a router with NAT (Network Address Translation, explained furtheron in this document) capability that allows it to connect multiple devices such as devices 107 and 108 while presenting only one device address to the external network. According to a particular embodiment, gateway 106 is equipped with a firewall that protects devices 107 and 108 for intrusion. Gateway 106 is further equipped with an antenna 1102 for transmission and reception of data over its WiFi interface.

Set Top Box 107, respectively PC 108 is linked to DSL gateway 106 via wired bidirectional link 1100, respectively bidirectional wireless link 1101. To this end, PC 108 is equipped with a WiFi interface and reception/transmission antenna 1103, and STB 107 is equipped with an Ethernet interface.

STB 107 and PC 108 are examples of remote configurable devices implementing the invention according to the method of transmission of device logging information. This embodiment is an example of a communication network with router device, namely gateway 106. According to a particular embodiment, gateway 106 does not comprise a router but a bridge or switch.

The difference between a bridge or switch and a router is the level of data communication on which they operate. A network bridge or level 2 switch connects multiple network segments at the data link layer (layer 2) of the OSI model. A network bridge or level 2 switch implements a mechanism by which the data from a transmitter equipment are conveyed to their recipient by examining the information located at level 2 of OSI model (MAC (Media Access Control) address for example), Layer 2 switching uses the media access control address (MAC address) from the host's network interface cards (NICs) to decide where to forward frames.

A router connects multiple network segments at the Network Layer (layer 3) of the OSI model. A router implements a mechanism by which the data from a transmitter equipment are conveyed to their recipient by examining the information located at level 3 of OSI model (IP for example), even if none of both knows the complete way that the data will have to follow.

Bridging and Routing are both ways of performing data control, but work through different methods. Bridging takes place at OSI Model Layer 2 (Data-Link Layer) while Routing takes place at the OSI Model Layer 3 (Network Layer). This difference means that a bridge directs frames according to hardware assigned MAC addresses while a router makes its decisions according to arbitrarily assigned IP Addresses. As a result of this, bridges are not concerned with and are unable to distinguish networks while routers can.

Bridges and routers can be implemented as hardware devices, as software integrated on a general-purpose device such as a personal computer, or as a soft-or hardware device integrated into a device with a specific purpose such as a modem gateway, or a Set Top Box or Digital Television.

Access from a first device to a second device connected through an Internet-type network, i.e. a packet switching network where data is interchanged using an Internet Protocol such as TCP/IP requires the use of NAT in a gateway in the user premises. In computer networking, NAT or network address translation is the process of modifying network address information in datagram packet headers while in transit across a traffic routing device for the purpose of remapping a given address space into another. This mechanism is implemented in a routing device that uses translation tables to map "hidden" addresses of the devices connected to the NAT (such as, for example, PC 108 and STB 107) into a single address and then rewrites the outgoing Internet Protocol (IP) packets on exit so that they appear to originate from the router (such as, for example, DSL gateway 106). In the reverse communications path, responses are mapped back to the originating IP address using the information stored in translation tables inside the device implementing the NAT such as for example gateway 106.

NAT has the limitations that not all data communication protocols are capable of traversing a NAT, i.e. are not capable of data communication with a device behind a NAT.

Configuration server 102 provides a web interface to monitoring device 101 via bidirectional link 1002 from configuration server 102 to network 10 and bidirectional link 1001 from network 10 to monitoring device 101. By means of this web interface, monitoring device 101 can instruct STB 107 to transmit device logging information. The settings that monitoring device 101 does via actions on the web interface provided by configuration server 102 are to this end translated to CWMP protocol configuration messages to STB 107.

Dotted line 1201 illustrates a connection between monitoring device 101 and configuration server 102, over which, for example, according to the described embodiment, are exchanged web interface elements and actions on that web interface.

Dotted line 1202 illustrates a connection between configuration server 102 and STB 107, where messages are exchanged, according for example to the described embodiment, the CWMP protocol, or, according to yet another particular embodiment, according to the SNMP protocol, or according to a web service protocol.

Dotted line 1203 illustrates a connection between device logging information from STB 107 and monitoring device 101. According to the described embodiment, monitoring device 101 configures STB 107 with its own address as destination address for the sending of device logging information.

The embodiment of this figure is illustrated as an example embodiment. In terms of the TR-069 standard, the configuration server is an ACS (Auto Configuration Server). The communication between the ACS 102 and STB 107 over connection 1202 is based on a bidirectional SOAP/HHTP protocol, which offers both a safe auto configuration and the control of other CPE management functions within an integrated framework. Using the CWMP protocol has amongst others the advantage to be able to reach remote configurable devices that are connected to a router or gateway through NAT. The CWMP protocol is particularly designed for traversing a router implementing NAT, due to the data communication protocols on which it is based, namely SOAP/HTTP. SOAP stands for Simple Object Access Protocol and is a protocol specification for exchanging information in the implementation of web services in data communication networks. HTTP stands for HyperText Transport Protocol. SOAP relies on Extensible Markup Language (XML) as its message format and usually relies on other Application Layer protocols, most notably Remote Procedure Call (RPC) and HTTP for message negotiation and transmission. CWMP, SOAP and HTTP are examples of web service protocols.

Other embodiments are possible and are compatible with the invention.

According to a particular embodiment, configuration server 102 does not provide a web interface to monitoring device 101, but provides a connection over which messages are exchanged using a specific protocol that is common to and known by each of these devices, such as plain ASCII formatted command strings or SOAP. Using such a connection, an application program on the monitoring device 101 can exchange messages with configuration server 102 so that it can configure STB 107.

According to a variant embodiment, configuration server 102 provides a command shell to monitoring device 101, such as a text-based command line shell such as TelNet or SSH (Secure SHell).

According to a particular embodiment of the invention, configuration server 102 uses the SNMP (Simple Network Management Protocol) protocol for remote configuration of STB 107.

According to a particular embodiment of the invention, the STB 107 is a DVB IPTV-STB, i.e. a Set Top Box that is compliant with a DVB standard (Digital Video Broadcasting) for television using the IP protocol, a standard published as ETSI document TS 102 034.

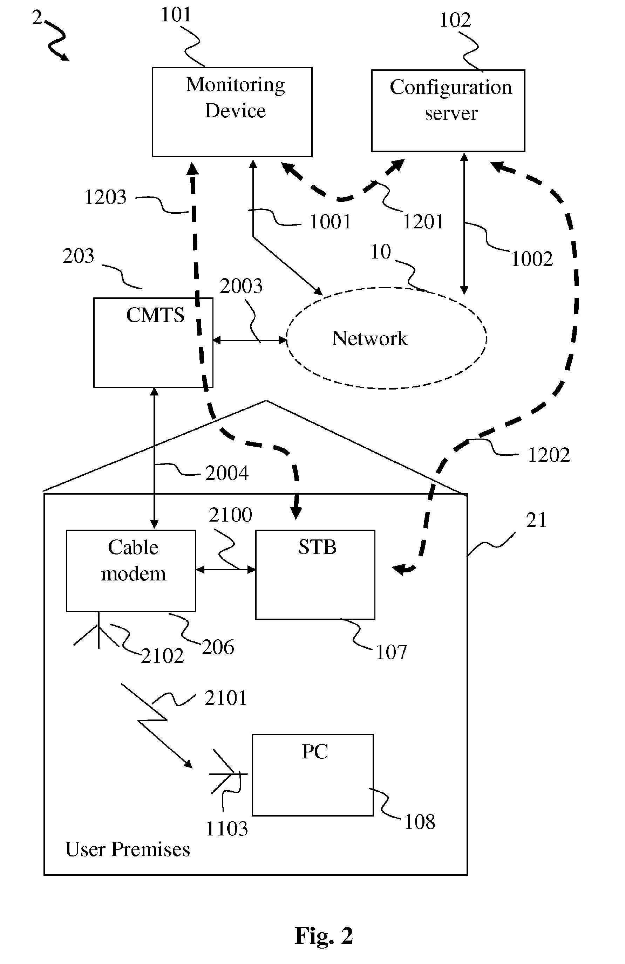

**Figure 2** shows a data communication network 2 implementing the invention according to a variant embodiment of figure 1. The elements having the same references as in figure 1 have already been described and are not described here any further.

In this particular embodiment, user premises 21 is not connected to an DSL gateway 106 and a DSLAM 103, but rather user premises 21 is connected to a cable modem 206 such as a Docsis modem and a CMTS (Cable Modem Termination System) 203. Docsis stands for Data Over Cable Service Interface Specification and is an international standard that defines the communications and operation support interface requirements for a data over cable system. Cable modems are primarily used to deliver broadband Internet access in the form of cable internet, taking for example advantage of the high bandwidth of a cable television network.

In this embodiment, CMTS 203 is connected to network 10 with bidirectionnal link 2003, and cable modem 206 is connected to CMTS 203 with bidirectional link 2004. Cable modem 206 is further connected to STB 107 by means of bidirectional link 2100, and to PC 108 by means of antenna 2102 and wireless communication link 2101. As for figure 1, link 2100 between STB 107 and Cable modem 206 is an ethernet-based link, and link 2101 between Cable modem 206 and PC 108 is a WiFi link, and over both links data is exchanged according to an Internet Protocol. Of course, other types of networks than IP-based over Ethernet and WiFi are compatible with the invention, such as IEEE 1394.

This embodiment is an example embodiment of the use of cable technologies, such as used for CATV (CAble TeleVision). Bidirectional link 2004 that connects CMTS 203 to Cable Modem 206, is for example based on a copper coaxial cable, or an optical fiber cable.

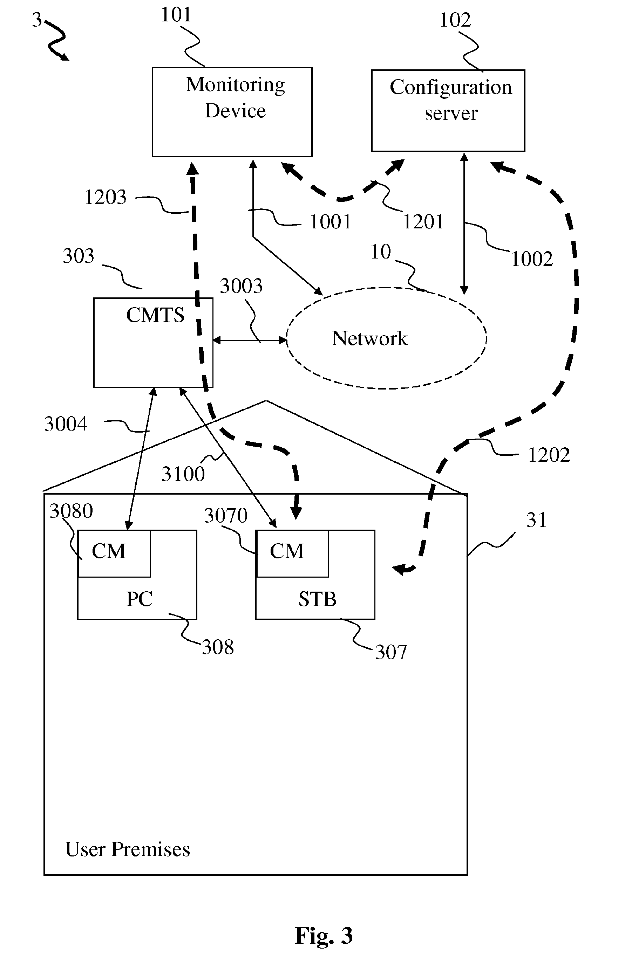

**Figure 3** shows a data communication network 3 implementing the invention according to a variant embodiment of figure 2. The elements having the same references as in figure 2 have already been described and are not described here any further.

In this particular embodiment, CMTS 303 is connected with bidirectional link 3003 to network 10, and user premises 31 is connected to CMTS with separate bidirectional links 3004, respectively 3100, to each equipment PC 308 and STB 307. Each of the equipment 308 and 307 in user premises 31 comprises a built-in cable modem, 3080 for PC 308, and 3070 for STB 307.

This embodiment is an example of a communication network without a router device.

According to the example embodiments of figures 1, 2 and 3, the destination address for the transmission of device logging traces is not the address of either a remote configurable device such as device 107/307, and nor is it the address of a configuration server 102, but rather it is the address of a third device, namely monitoring device 101. This feature has the advantage to allow transmission of device logging information to another device than the configuring device itself, which is useful for example for remote troubleshooting purposes, or for remote usage statistics logging.

According to a variant embodiment of the embodiments illustrated by figures 1, 2 and 3, the configuration server 102 directly interfaces with a user, that directly intervenes on the configuration server to configure a remote configurable device such as STB 107, STB 307, PC 108 or PC 308 of figures 1, 2 and 3.

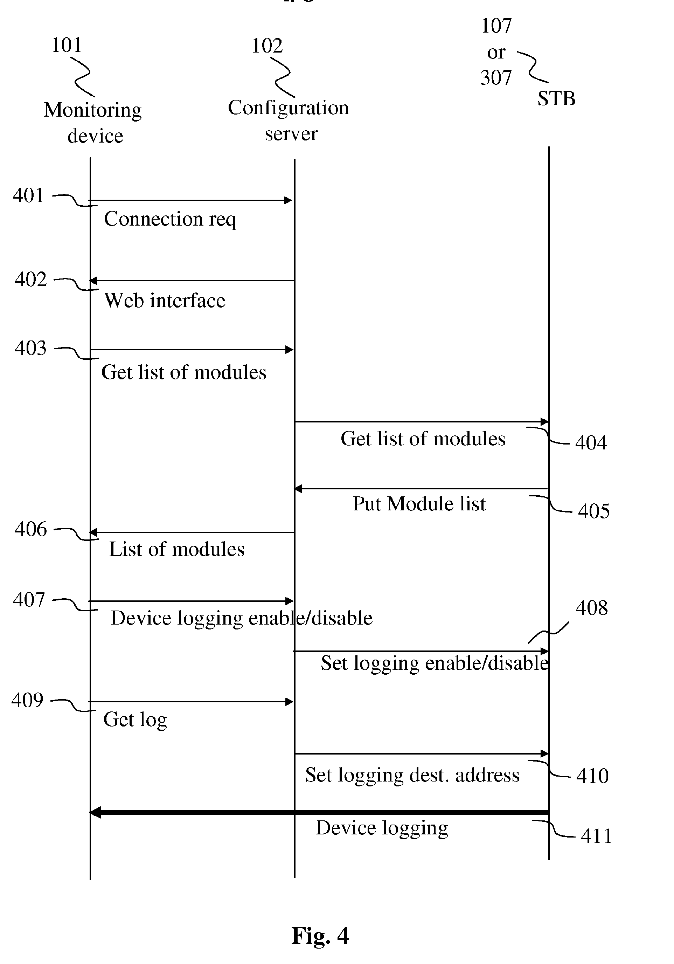

**Figure 4** shows a sequence diagram that illustrates message exchange between devices belonging to the network infrastructure of figures 1 or 2 and implementing the invention, according to a particular embodiment.

Vertical lines 101, 102 and 107/307 represent respectively monitoring device 101, configuration server 102, and STB 107 or STB 307. Arrows 401 to 411 represent messages that are exchanged between these devices.

The sequence diagram starts with a request for connection 401 of monitoring device 101 to configuration server 102. Configuration server 102 replies to monitoring device 101 with the transmission of a web interface, illustrated by arrow 402, which allows monitoring device 101 to configure STB 107/307. Using the web interface, monitoring device 101 requests a list of modules for which device logging information can be generated, which is illustrated by arrow 403. Configuration server 102 executes the request by directly addressing a CWMP request for a list of modules for which logging information can be retrieved, from STB 107/307, illustrated by arrow 404. STB 107/307 receives request 404 and replies to the request by sending the list of modules, for which logging information can be retrieved, according to the CWMP protocol, illustrated by arrow 405. Configuration server 102 updates its web interface to present the list of modules to monitoring device 101, illustrated by arrow 406. Monitoring device 101 selects, via the web interface, from the list of modules the modules of which it wants to get logging information from. This is illustrated by arrow 407 from monitoring device 101 to configuration server 102. Configuration server 102 converts this selection into a CWMP configuration message that it addresses to STB 107/307, illustrated by arrow 408. Monitoring device 101 further uses the web interface to request the transmission of device logging information from STB 107/307 to itself, by providing of an address for transmission, in this case its own address. Therefore, it sends request 409 to configuration server 102. Upon receipt of the request, configuration server 102 sends a CWMP configuration message 410 to STB 107/307, which message comprises the destination address (for example: IP address and transport layer port number) where the logging information is to be transmitted to, i.e. the address of monitoring device 101. Finally, STB 107/307 directly transmits device logging information for the selected modules to the configured destination address, i.e. to monitoring device 101, illustrated by arrow 411. The transmission stops when monitoring device 101 instructs configuration server 102 to do so, when monitoring device 101 disconnects, or when STB 107/307 is disconnected or powered down.

According to a particular embodiment of the invention, the request to enable or disable does not comprise all modules that are comprised in the list of modules that is received. This feature is useful when one only wants to enable or disable device logging generation for a selected set of modules. Naturally, the selected set of modules can comprise all modules received in the list of modules.

According to a particular embodiment of the invention, a verbosity level is defined for device logging information. The verbosity level indicates the extensiveness of the device logging information. As an example, for three verbosity levels, the lowest level 1 is generating device logging information with less details than the highest level 3.

According to a particular embodiment of the invention, a verbosity level is specified as a number, for example 1, 2, or 3. According to a variant embodiment of the invention, a verbosity level is specified as an enumerator or a string, for example LOW, MEDIUM or HIGH. According to yet another embodiment, a verbosity level is specified by a number indicating the highest possible level of verbosity for example the number 3, specified per each individual module or once for all modules.

According to a particular embodiment of the invention, a verbosity level is specified per each individual module. According to a variant embodiment a verbosity level is specified for all modules.

According to a particular embodiment of the invention, the possible verbosity levels are comprised in the list of modules that is transmitted from a first device to a second device in response to a request for transmission of a list of modules for which device logging information can be generated, and the selected set of modules from that list comprises a setting of a verbosity level for all modules from the set of modules or for each individual module from the set of modules.

According to a particular embodiment of the invention, the verbosity level(s) are not comprised in the selected set of modules, but transmitted apart to the remote configurable device. This has the advantage, for example, to allow to set the verbosity level for all modules by sending one single configuration instruction to the remote configurable device.

According to a particular embodiment of the invention, the list of modules transmitted from remote configurable device 107 to configuration server 102 comprises a maximum configurable level of device logging verbosity for all the modules in the selected set of modules. An example of a maximum configurable level is 1 or 3 or 10, meaning that respectively 1 or 3 or 10 levels can be set for all modules in the list. As an example, for three verbosity levels, device logging information generated for level 1 is basic information such as "stream decoding module active". Level 2 is then "starting decoding stream" or "stopping decoding stream". Level 3 is then "decoding multicast address 224. 191. 202.80". This feature allows a configuration server to be informed of the level of detail with which the device logging information can be generated.

According to a particular embodiment of the invention, the request to enable or disable the transmission of device logging information comprises a verbosity level specified per module in the selected set of modules. Using the previous example, the selected set comprises two modules, where for module "decoding" the verbosity level is set to 3 (most details) and verbosity level for module "descrambling" is set to 1 (least details). This has the advantage that the details of device logging information for a particular module of interest can be increased while that of other modules can be decreased, which allows to concentrate on the module of interest.

According to a particular embodiment of the invention, the verbosity levels are represented by strings or by an enumerated type, for example "INFO", "DEBUG", "ERROR", "ALERT", "I/O" (meaning input/output"), "MINOR", "MAJOR", and so on. This has the advantage to be explicit as to the meaning of each verbosity level.

According to a particular embodiment, the request to enable or disable said transmission comprises a verbosity level for all the modules in the selected list of modules. This has the advantage to enable efficient setting of module verbosity levels for a whole set of modules, and avoids the need for transmission of settings for each module.

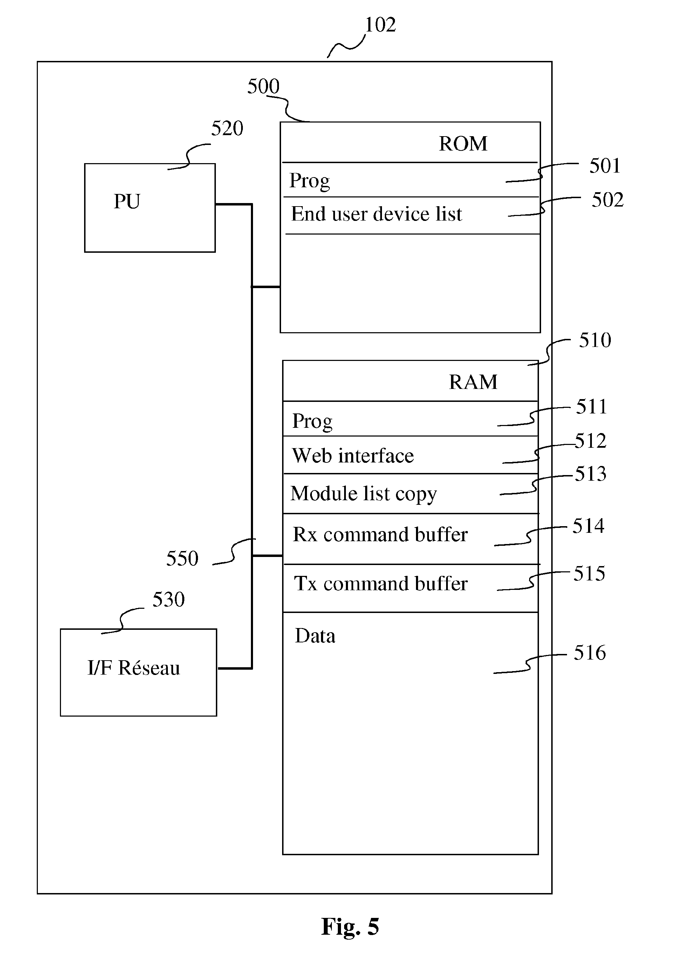

**Figure 5** diagrammatically shows a configuration server according to a particular embodiment of the method of reception of device logging information. The configuration server is for example configuration server 102 of figures 1, 2 or 3. The configuration server 102 comprises, connected to each other by an address- and data bus 550:
- a processing unit 520 (or CPU for Central Processing Unit);
- a non-volatile memory of type ROM (Read Only Memory) 500 ;
- a volatile memory of type RAM (Random Access Memory) 510 ; and
- a network interface 530 for connection of the device to network 10 of figures 1, 2 or 3, allowing the transmission and the reception of configuration data and commands from and to a remote configurable device such as STB 107/307 and PC 108/308 of figures 1 and 2, respectively 3, as well as the transmission of a web-interface to monitoring device 101, and reception of configuration instructions from monitoring device 101.

It is noted that the word "register" used in the description of memories 500 and 510 designates in each of the mentioned memories, a low-capacity memory zone capable of storing some binary data, as well as a high-capacity memory zone, capable of storing an executable program, or a whole data set, such as a complete web interface, or a complete list of modules.

Processing unit 520 can be implemented as a microprocessor, a custom chip, a dedicated microcontroller, and so on. ROM memory 500 can be implemented in any form of non-volatile memory, such as a hard disk, non-volatile random-access memory, EPROM (Erasable Programmable ROM), and so on.

The ROM memory 500 comprises notably a register 501 that holds a program 'prog' representing an executable program comprising the method of reception of device logging information. The ROM memory 500 further comprises a list of addresses of remote configurable devices implementing the invention according to the method of transmission of device logging information, such as those of STB 107 and PC 108, in register 502. When powered up, the microprocessor 520 loads the instructions comprised in ROM register 501, copies them to RAM register 510, and executes them.

The RAM memory 510 comprises notably:
- a register 511 comprising a copy of the program 'prog' of ROM register 501 ;
- a register 512 comprising a web interface for transmission to monitoring device 101 of figures 1, 2 and 3, giving access to configuration of remote configurable devices implementing the method of transmission of device logging information such as STB 107/307 and PC 108/308;
- A register 513 comprising a copy of the module list of remote configurable devices implementing the method of transmission of device logging information, such as STB 107/307, used for building the web interface. The module list is a copy of the module list obtained from STB 107/307;
- A FIFO reception buffer 514 for temporary storage of CWMP messages received from remote configurable devices implementing the method of transmission of device logging information, such as STB 107/307, to be handled by the configuration server 102;
- A FIFO transmission buffer 515 for temporary storage of CWMP messages to be transmitted to remote configurable devices implementing the method of transmission of device logging information, such as STB device 107/307; and
- a data register 516 comprising temporary data and variables needed during the execution of the program 'prog' comprised in register 511.

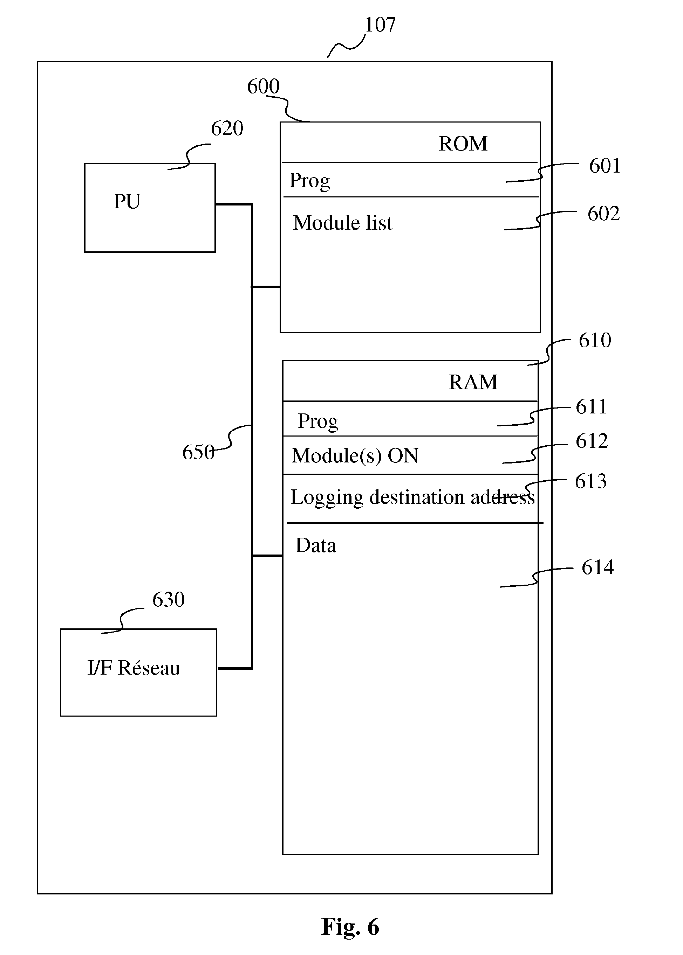

**Figure 6** diagrammatically shows a remote configurable device according to a particular embodiment of the method of transmission of device logging information. The remote configurable device is for example STB 107 of figures 1 and 2 or STB 307 of figure 3. The remote configurable device 107/307 comprises, connected to each other by an address- and data bus 650:
- a processing unit 620 (or CPU for Central Processing Unit);
- a non-volatile memory of type ROM (Read Only Memory) 600 ;
- a volatile memory of type RAM (Random Access Memory) 610 ; and
- a network interface 630 for connection of the device 107/307 to gateway 106 of figure 1 that gives the device 107/307 access to network 10 of figures 1-3, allowing the transmission and the reception of configuration data and commands from and to a configuration server 102 of figs. 1, 2 or 3, as well as for the transmission of device logging information to monitoring device 101.

It is noted that the word "register" used in the description of memories 600 and 610 designates in each of the mentioned memories, a low-capacity memory zone capable of storing some binary data, as well as a high-capacity memory zone, capable of storing an executable program, or a whole data set, such as a complete list of modules.

Processing unit 620 can be implemented as a microprocessor, a custom chip, a dedicated microcontroller, and so on. ROM memory 600 can be implemented in any form of non-volatile memory, such as a hard disk, non-volatile random-access memory, EPROM (Erasable Programmable ROM), and so on.

The ROM memory 600 comprises notably a program "prog" 601 representing an executable program comprising the method of transmission of device logging information according to a particular embodiment of the invention. The ROM memory 600 further comprises a list of modules for which logging information can be transmitted, in register 602. When powered up, the microprocessor 620 loads the instructions comprised in ROM register 601, copies them to RAM register 610, and executes them.

The RAM memory 610 comprises notably:
- a register 611 comprising a copy of the program 'prog' of ROM register 601 ;
- a register 612 comprising a list of modules for which transmission of device logging has been enabled/disabled;
- A register 613 comprising the destination address for the device logging information, corresponding to the address of monitoring device 101; and
- a data register 614 comprising temporary data and variables needed during the execution of the program 'prog' comprised in register 611.

Other device architectures than illustrated by figs 5 and 6 are possible and compatible with the method of reception, respectively the method of transmission of device logging information according to the invention. Notably, according to variant embodiments, the invention is implemented as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example a dedicated electronic card in a personal computer.

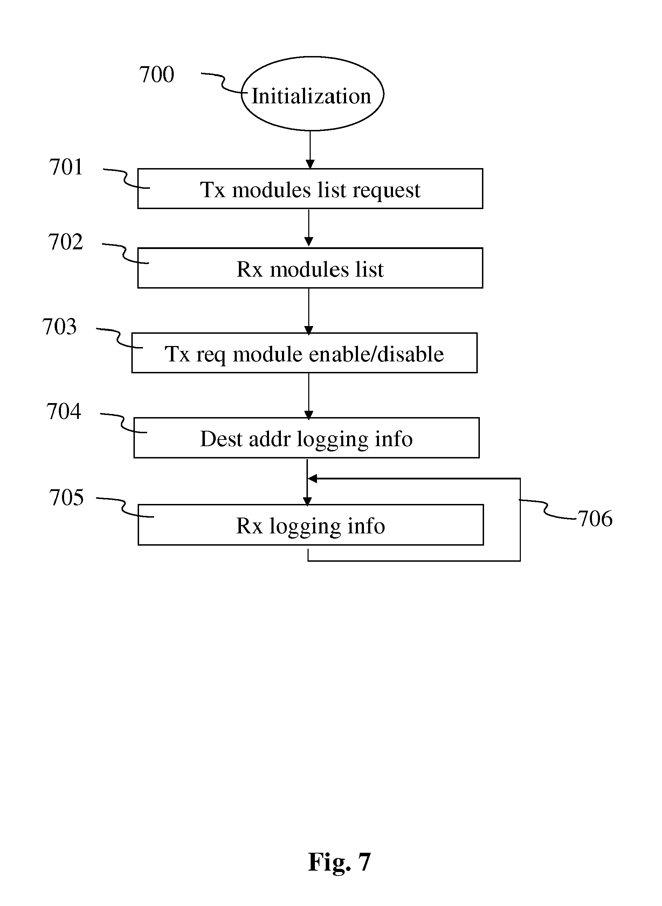

**Figure 7** shows a method of reception of device logging information according to the invention, implemented for example by configuration server 102 of figures 1, 2, 3 and 5.

The method begins with an initialization phase 700 during which the different variables and parameters needed for the functioning of the device 102 are updated, for example, the copying of the program 'prog' from ROM register 501 to RAM register 511, and the initialization of data and variables in RAM register 516.

Then, during a step 701, the device 102 transmits a request for transmission of a list of modules from which device logging information can be generated, for example request 404 of figure 4.

During a step 702, the device 102 receives such a list of modules, for example, response 405 of figure 4.

In a step 703, the device 102 transmits a request to enable or disable a sending of device logging information for a selected set of modules from the list, for example, request 408 of figure 4.

Then, in a step 704, the device 102 transmits a destination address for sending device logging information, for example illustrated by arrow 410 of figure 4.

Finally, in step 705, device logging information is received on the destination address from modules for which the generation of device logging information is enabled, for example illustrated by arrow 411 of figure 4.

Then step 705 is iterated, illustrated by arrow 706.

According to a variant embodiment, steps 701, 702 and 704 are executed once, where after step 703 is executed several times. According to this variant embodiment, the request for a list of modules is transmitted once, then the reply is stored and the destination address for the device logging information is transmitted only once. The request for a list of modules and the transmission of a destination address for device logging information are not necessarily executed in the listed order. Now, the list of modules is stored and known, and can be used to execute step 703 multiple times, that is transmission of the modules for which device logging information generation is to be enabled or disabled.

According to a variant embodiment, step 704 is executed multiple times, in order to change the destination address of the device logging information.

According to a variant embodiment of the method of transmission and the method of reception according to the invention, steps 604 and 704 are optional, when not configured, the device logging information is sent to the address of the device that executed the remote configuration. This feature has the advantage to further reduce the number of configurations needed to put into place a transmission and a reception of device logging information according to the invention.

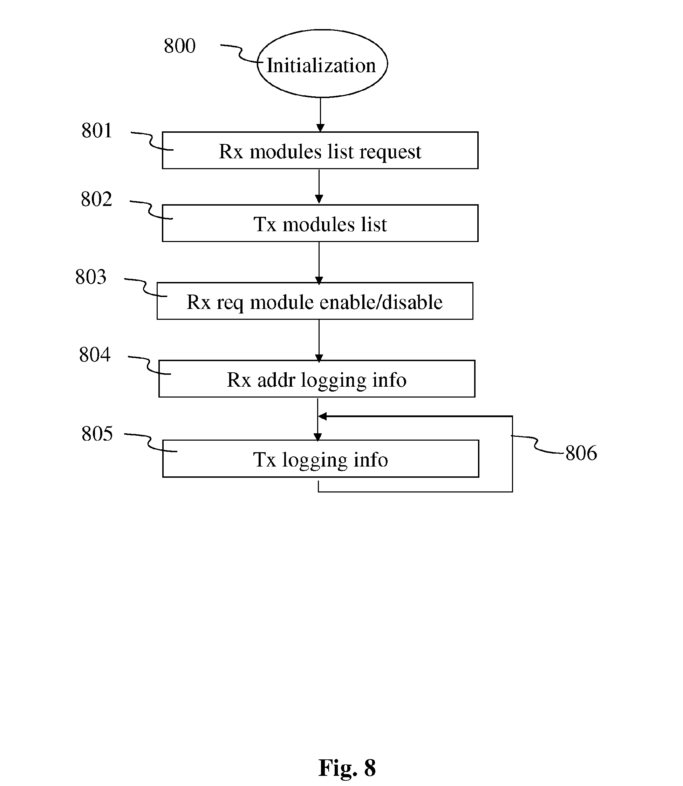

**Figure 8** shows a method of transmission of device logging information according to the invention, for example implemented in device 107 of figures 1, 2, device 307 of figure 3 and device 107 of figure 6.

The method begins with an initialization phase 800 during which the different variables and parameters needed for the functioning of the device 107/307 are updated, for example, the copying of the program 'prog' frim ROM register 601 to RAM register 611, and the initialization of data and variables in RAM register 614.

Then, during a step 801, the device 107/307 receives a request for transmission of a list of modules for which device logging information can be generated, for example request 404 of figure 4.

Then, during a step 802, the device 107/307 transmits such a list of modules, for example, response 405 of figure 4.

Then, during a step 803, the device 107/307 receives a request to enable or disable generation of device logging information for a selected set of modules from the list, for example, through request 408 of figure 4.

Then, in a step 804, the device 107/307 receives a destination address for sending of device logging information, for example, through 410 of figure 4.

Finally, in step 805, device logging information is sent to the destination address for which said generation of device logging information is enabled, for example, illustrated by 411 of figure 4.

Then step 805 is iterated, illustrated by arrow 806.

According to a variant embodiment, steps 801, 802 and 804 are executed once, where after step 803 is executed several times. According to this variant embodiment, the request for a list of modules, and the destination address for the device logging information are received once. Note that the steps of reception of a request for a list of modules and the step o of reception of a destination address for device logging information are not necessarily executed in the listed order. Now, step 803 of reception of the modules for which device logging information generation is to be enabled or disabled can be executed multiple times.

According to a variant embodiment, step 804 is executed multiple times, in order to change the destination address of the device logging information.

Naturally, the invention is not limited to the embodiments previously described.

In particular, the invention is not limited to the data communication network architectures as described in respect of Figures 1, 2 and 3 but concerns any architecture implementing a link or a network connecting at least one remote configurable device and a device capable of configuring the at least one remote configurable device.

In particular, devices 101 (monitoring device) and 102 (configuration server) may be implemented as a dedicated device, or as general hardware equipment, such as a Personal Computer, running software application programs that allows them to implement the functions as described.

In particular, the functions of the monitoring device 101 and configuration server 102 may be implemented in a single device, or in a single software application program.

In particular, user premises 11, 21, and 31 can comprise more or less equipment than previously described.

In particular, a remote configurable device such as device 107 may not be connected to the network 10 via a gateway, but directly, when provided with a corresponding network interface.

According to the described example embodiments, device logging information is requested from and transmitted by device 107 of figures 1 and 2 and device 307 for figure 3, a Set Top Box. Naturally, implementation of the method of transmission of device logging information is not restricted to Set Top Boxes, but can be implemented in any type of remote configurable device, such as a Personal Computer (for ex. device 108 of figures 1 and 2, or device 308 of figure 3) or gateway (for example gateway 106 of figure 1), or mobile devices such as hand-held telephones, modem devices (such as cable modem 206 of figure 2), etc.

Naturally, the implementation of the invention is not restricted to the use of one device implementing the method of transmission of device logging information with one device implementing the method of reception of device logging information. The invention can be implemented in several equipments at the same time, communicating with each other through a network, according to the invention.

In particular, the transmissions between the devices of figures 1, 2 and 3 may be secured according to a secure connection and data transmission protocol such as TLS (Transport Layer Security) or SSL (Secure Sockets Layer). Such an implementation may need additional equipment or functions added to equipment, such as data encryption and decryption functions, and connection authentication.

The transmission and reception steps described by the preceding figures 7 and 8 do not necessarily be implemented as separated messages, several transmission/reception steps can be combined to transmit/receive in a same step a combined message that otherwise needs several steps, such as the transmission/reception of a request to enable or disable a sending/reception of device logging for a selected set of modules, can be combined with the transmission/reception of a destination address for device logging information, in order to optimize the number of exchanged messages.

The method of reception, as well as the method of transmission can be implemented using protocols for configuration, control, diagnostics and usage statistics retrieval, for example through the SNMP (Simple Network Management Protocol) protocol or the CWMP (Consumer Premises Equipment - Wide Area Network Management Protocol) protocol and its extensions, or any other standardized or proprietary messages exchange protocol.

Using SNMP, the invention can be implemented by having an SNMP manager in the device wishing to retrieve device logging information such as for example configuration manager 102 and an SNMP agent in the source device from which logging information is to be retrieved such as for example remote configurable device 107 and by adding a MIB (Management Information) with a specific attribute for the management of device logging information in the source device. For this embodiment, MIB attributes can be added on the level of the source device for example for each module of which device logging can be transmitted, with the name « setLogging » of an enumerated type, allowing the values described hereunder, accessible in read and write mode:
- LOGGING_ON (enumerator value: 1) ;
- LOGGING_OFF (enumerator value: 0) ;

The value LOGGING_OFF means that no logging output is to be transmitted for the module to which the attribute belongs. The value LOGGING_ON means that logging output is to be generated for the module to which the attribute belongs.

As previously mentioned, the invention can also be implemented with the use of the CWMP protocol. This protocol is defined in the TR-069 (short for Technical Report 069) specification entitled *CPE WAN Management Protocol* (CWMP), available on the Broadband forum website, version 1.1, version 1 amendment 2, version date December 2007, URL http://www.broadband-forum.org/technical/download/TR-069Amendment2.pdf.

The TR-069 specification defines an application layer protocol for remote management of end-user devices. As a bidirectional SOAP/HTTP based protocol it provides the communication between CPE and Auto Configuration Servers (ACS). It includes both a safe auto configuration of CPE devices and the control of other CPE management functions within an integrated framework. TR-069 is the current standard for remote configuration of devices in the range of DSL broadband market. Other fora, such as Home Gateway Initiative (HGI) and DVB, are endorsing CWMP as the protocol for remote management of home network devices (e.g. the HGI gateway) and terminals (e.g. the DVB IPTV STB). According to a particular embodiment based on the TR-069 standard, the invention is implemented by adding an ACS (Auto Configuration Server) on the level of the device that wants to retrieve logging information. In the device to be logged, a CWMP client is added as well as an object comprising the specific attributes for the management of logging information. In terms of the CWMP standard, the device to retrieve logging information from, here for example STB 107 or PC 108, is the CPE. For an embodiment of the invention using the CWMP standard, an example is given in Annex A of this document.

Annex A comprises a table with the following colums that illustrate elements that are added to the TR-069 datamodel destined to be implemented by a remote configurable device, that allows implementation of the invention: definition of the object, type of the object, read or write possibility, and parameters.

According to the embodiment described in Annex A:
- "GetDeviceLoggingStatus" is a readable attribute that returns the status of the device logging information configuration. The status is returned as a comma separated list of one or more sets of 3 parameters, as described for the corresponding Set command;
- NetworkDeviceLoggingEnable is a writeable attribute that enables or disables the transmission of device logging information on a UDP socket, where the destination IP address is given by _SetIPAddress and the destination UDP port is given by SetUDPPort;
- SetIPAddress is a writeable attribute that Contains the IP destination address for the transmission of device logging information;
- SetUDPPort is a writeable attribute that contains the destination UDP port for the transmission of device logging information;

The SNMP protocol is defined in a series of documents called RFCs, for Request For Comment, like the RFC 1156 entitled "A Simple Network Management Protocol". The CWMP protocol is defined by document TR-069 and its different amendments and extensions TR-098, TR-104, TR-106, TR-110, TR-111, TR-135, TR-140 and TR-142, available from the Broadband Forum.

The described embodiments are implementation examples; other embodiments are possible and compatible with the invention.

Notably, concerning an embodiment with the SNMP protocol, other MIB attributes can be put into place for implementation of the method of device logging information transmission. For example an attribute "deviceLoglnfo" can be defined, that can take values "on" and "off". For example, multiple MIB attributes can be put into place, for example through separation of parameters that can be written from parameters that can be read by a configuration server or by any other device implementing the SNMP protocol.

Notably, concerning an embodiment with the CWMP protocol, other attributes than an object Device.Devicelnfo and other parameters than those described in annex A can be used to implement the invention.

For example, the setting of device logging information destination address and port can be combined in order to simplify their usage and to limit the number of messages exchanged between the configuring device and the device that is configured, i.e. the remote configurable device.

For example, the list of modules and the list of verbosity levels can be transmitted and received in separate messages, in order to propose a more flexible way to handle the configuration of a remote configurable device.

### ANNEX A

Table summarizing a particular embodiment of the invention with the CWMP protocol: definition of object attributes, parameter type, read/write accessibility and description.

| .Device.DeviceInfo. | Parameter type | R/ W | Description |
|---|---|---|---|
| SetDeviceLogging | character string | W | Changes the device logging behaviour of the device for purposes of troubleshooting or usage statistics collection. |
| | | | It is a comma separated list of one or more sets of 3 parameters. |
| | | | The first parameter indicates the module. The second parameter indicates the verbosity level for the module. The third parameter indicates the reserved keyword "enable" or "disable". |
| | | | A list containing a single set where the first parameter has the reserved module name "all" means that all the modules should be configured according to the settings of the 2^{nd} and 3^{rd} parameters. |
| GetDeviceLoggingCapabilities | character string | R | Returns the capabilities of the device logging information configuration for the device. The device logging information capabilities are returned as a comma separated list of one or more sets of 3 parameters, as described for the SetDeviceLoggingCapab ilites command. |
| GetDeviceLoggingStatus | character string | R | Returns the status of the device logging information configuration. The status is returned as a comma separated list of one or more sets of 3 parameters, as described for the corresponding Set command. |
| NetworkDeviceLoggingEnable | boolean | W | Enables or disables the transmission of device logging information on a UDP socket, where the destination IP address is given by_SetIPAddress and the destination UDP port is given by SetUDPPort |
| SetIPAddress | string | W | Contains the IP destination address for the transmission of device logging information |
| SetUDPPort | integer | W | Contains the destination UDP port for the transmission of device logging information |

## Claims

1. Method of reception of device logging information, **characterized in that** device logging information is received from a first (107) device connected to a second (102) device through a data communication network, said method comprising the following steps:
- transmission (701) by said second device (102) of a request for transmission of a list of modules for which device logging information can be generated;
- reception (702) by said second device(102) of said list;
- transmission (703) by said second device (102) of a request to enable or disable generation of device logging information for a selected set of modules from said list;
- transmission (704) by said second device (102) of a destination address for sending device logging information;
- reception (705) of said device logging information on said destination address from modules for which said generation of device logging information is enabled.

2. Method according to claim 1, **characterized in that** said destination address is an address of a third device (101), different from an address of said first (107) and said second (102) device.

3. Method according to any of claims 1 to 2, **characterized in that** said list of modules and said request to enable or disable generation of device logging information comprises a verbosity level specified for all modules.

4. Method according to any of claims 1 to 2, **characterized in that** said list of modules and said request to enable or disable generation of device logging information comprises a verbosity level specified per module.

5. Method according to any of the preceding claims, **characterized in that** said network is a network that comprises at least one router device.

6. Method according to any of the preceding claims, **characterized in that** the steps of transmission and reception between said first (107) and said second (102) device are based on a web service protocol.

7. Method of transmission of device logging information, **characterized in that** device logging information is transmitted from a first device (107) connected to a second (102) device through a data communication network, whereby said first (107) device implements said method that comprises at least the following steps:
- reception (801) by said first device (107) of a request to transmit a list of modules for which device logging information can be generated;
- transmission (802) by said first device (107) of said list;
- reception (803) by said first device (107) of a request to enable or disable generation of device logging information for a selected set of modules from said list;
- reception (804) by said first device (107) of a destination address for sending device logging information;
- transmission (805) of said device logging information on said destination address from modules for which said generation of device logging information is enabled.

8. Method according to claim 7, **characterized in that** said destination address is an address of a third device (101), different from an address of said first (107) and said second (102) device.

9. Method according to any of claims 7 to 8, **characterized in that** said list of modules and said request to enable or disable generation of device logging information comprises a verbosity level specified for all modules.

10. Method according to any of claims 7 to 8, **characterized in that** said list of modules and said request to enable or disable generation of device logging information comprises a verbosity level specified per module.

11. Method according to any of claims 7 to 10, **characterized in that** said network is a network that comprises at least one router device

12. Method according to any of claims 7 to 11, **characterized in that** the steps of transmission and reception between said first (107) and said second (102) device are based on a web service protocol.

13. Device (102) for reception of device logging information, **characterized in that** device logging information is received from a first device (107) connected to a second device (102) through a data communication network, said device for reception (102) comprising the following means:
- means for transmission of a request for transmission of a list of modules from which device logging information can be generated;
- means for reception of said list;
- means for transmission of a request to enable or disable generation of device logging information for a selected set of modules from said list;
- means for transmission of a destination address for sending device logging information;
- means for reception of said device logging information on said destination address from modules for which said generation of device logging information is enabled.

14. Device (107) for transmission of device logging information, **characterized in that** device logging information is transmitted from said device for transmission (107), where said device for transmission (107) is connected to another second device (102) through a data communication network, whereby said device for transmission (107) comprises at least the following means:
- means for reception of a request to transmit a list of modules for which device logging information can be generated;
- means for transmission of said list;
- means for reception of a request to enable or disable generation of device logging information for a selected set of modules from said list;
- means for reception of a destination address for sending device logging information;
- means for transmission of said device logging information on said destination address from modules for which said generation of device logging information is enabled.
